**Europäisches Patentamt**

**European Patent Office**

**Office européen des brevets**

(19)

(11) Veröffentlichungsnummer: **0 086 433**

**B1**

(12)

# EUROPÄISCHE PATENTSCHRIFT

(45) Veröffentlichungstag der Patentschrift:
20.05.87

(21) Anmeldenummer: **83101150.7**

(22) Anmeldetag: **07.02.83**

(51) Int. Cl.⁴: **G 01 L 5/10,** G 01 M 13/02, G 01 P 3/60

(54) **Schaltungsanordnung zur Bestimmung der Spannung eines Keilriemens.**

(30) Priorität: **11.02.82 DE 3204783**

(43) Veröffentlichungstag der Anmeldung:
**24.08.83 Patentblatt 83/34**

(45) Bekanntmachung des Hinweises auf die Patenterteilung:
**20.05.87 Patentblatt 87/21**

(84) Benannte Vertragsstaaten:
**FR GB IT**

(56) Entgegenhaltungen:
**US-A-4 263 578**

(73) Patentinhaber: **Siemens Aktiengesellschaft Berlin und München, Wittelsbacherplatz 2, D-8000 München 2 (DE)**

(72) Erfinder: **Kron, Jürgen, Dipl.- Ing., Ruhesteinstrasse 3, D-7505 Ettlingen (DE)**
Erfinder: **Otte, Hans- Henning, Dr., Kurpfalzstrasse 4, D-6729 Hagenbach (DE)**
Erfinder: **Pilz, Robert, Josef- Stöhrer- Weg 11, D-7505 Ettlingen (DE)**

EP 0 086 433 B1

## Beschreibung

Die Erfindung bezieht sich auf eine Schaltungsanordnung zur Bestimmung der Spannung eines Keilriemens zwischen zwei mit Wellen einer antreibenden bzw. einer angetriebenen Einheit verbundenen Keilriemenscheiben mit drehzahlproportionalen Impulsgebern an der antreibenden und der angetriebenen Einheit, deren Ausgangsimpulse über Impulsformer und mindestens einen Zähler zur Ermittlung des Schlupfes ausgewertet werden.

Bei der Überprüfung der Fahrtüchtigkeit eines Kraftfahrzeuges wird beispielsweise regelmäßig auch der Zustand des Keilriemens zwischen der Brennkraftmaschine und dem elektrischen Generator (Lichtmaschine) des Fahrzeugs inspiziert. Maßgebend für eine gute Funktionstüchtigkeit des Keilriemens ist seine mechanische Spannung. Sitzt der Keilriemen zu locker, so ist die Drehmomentübertragung mangelhaft; im Extremfall kann der Keilriemen sogar abgeschleudert werden. Bei zu straffer Spannung des Keilriemens können dagegen die Lager der Keilriemenscheiben auf die Dauer beschädigt werden.

Es ist bereits aus der US-A-4 263 578 bekannt, über Unterbrecherkontakte eines Motors abgenommene Spannungspulse und von der Lichtmaschine abgenommene Spannungspulse über Impulsformer und Zähler hinsichtlich des Schlupfes auszuwerten. Eine Zählung wird hier während einer Meßperiode nur zur Detektion des Über- oder Unterschreitens eines vorgegebenen Toleranzwertes durchgeführt. Eine objektive Messung eines bestimmten Schlupfwertes und damit der Keilriemenspannung liegt auch hier nicht als weiterverarbeitbares Ergebnis vor.

Es war bis jetzt auch üblich, die Überprüfung der richtigen Spannung des Keilriemens der Erfahrung eines Kraftfahrzeugmechanikers zu überlassen, der entweder nur durch Inaugenscheinnahme oder nach Prüfen der Spannung des Keilriemens von Hand über gut oder schlecht entschied. Ein derartiges subjektives Verfahren eignet sich nicht für die in den letzten Jahren üblich gewordenen Kraftfahrzeuginspektionen mittels Prüfgeräten, die am Ende der Prüfung eine Liste der überprüften Funktionen mit "Gut"- oder "Schlecht"-Angaben ausdrucken.

Es liegt demnach ein Bedürfnis vor, eine objektive Messung der Keilriemenspannung vorzunehmen. Die Messung sollte Zahlenwerte liefern, die mit vorgegebenen Grenzwerten vergleichbar sind und damit eine maschinelle "Gut/Schlecht"-Entscheidung ermöglichen.

Dieses Ziel wird gemäß der Erfindung bei einer eingangs genannten Schaltungsanordnung durch die kennzeichnenden Merkmale des Anspruchs 1 erreicht.

Die antreibende Einheit kann eine Brennkraftmaschine und die angetriebene Einheit ein Generator sein.

Es hat sich herausgestellt, daß eine Schlupfmessung bei einer bestimmten konstanten Drehzahl zwischen der antreibenden und der angetriebenen Einheit ohne weiteres nicht genügt, weil der Schlupf auf irreguläre Weise drehzahlabhängig ist. Der Keilriemen stellt nämlich ein schwingungsfähiges Gebilde dar, das bei seiner Bewegung bei bestimmten Drehzahlen Resonanzerscheinungen unterliegt, die zu einer Art stehender Wellen längs des Keilriemens führen, welche den Schlupf auf unvorsehbare Weise beeinflussen. Die Resonanzerscheinungen sind zwar von mehreren Faktoren abhängig, wie jedoch leicht einsehbar, treten die stehenden Wellen als stationärer Zustand vorwiegend bei bestimmten Drehzahlen auf. Es ist deshalb zweckmäßig, während der Schlupfmessung nicht bei einer Drehzahl zu verweilen, sondern während eines Übergangszustandes (Beschleunigungszustand) zu messen. Während des Beschleunigungszustandes ist der Keilriemenantrieb mit einem Drehmoment belastet, das aus der Trägheit der anzutreibenden Teile resultiert. Eine zusätzliche Drehmomentübertragung durch eine Belastung der angetriebenen Einheit, beispielsweise des Generators, mit einem Verbraucherstrom, der seiner oberen Grenzbelastung entspricht, verbessert die Bedingungen der Schlupfmessung zusätzlich.

Zweckmäßig wird für die Schlupfmessung die Differenz zwischen einer während einer vorgegebenen Anzahl von Umdrehungen der antreibenden Einheit gezählten Anzahl von umdrehungsproportionalen Impulsen der angetriebenen Einheit und einer während der gleichen Umdrehungszahl der antreibenden Einheit bei angenommener fester Kopplung der beiden Einheiten zu erwartenden Anzahl von Impulsen der angetriebenen Einheit, bezogen auf diese Anzahl, herangezogen.

Es ist bei der Impulszählung ein Fehler über zwei Impulsflanken möglich, einer Flanke am Anfang und einer Flanke am Ende des Meßintervalls. Um einen Auflösungsfehler von < 1 % zu erhalten, ist es deshalb zweckmäßig, mindestens 200 Impulsflanken zu zählen.

Zweckmäßig werden die Umdrehungen der antreibenden Einheit, während deren Ablaufs die von der angetriebenen, beschleunigten Einheit abgenommene schlupfabhängige, umdrehungsproportionale Impulsanzahl bestimmt wird, ihrerseits innerhalb eines vorgegebenen Drehzahlbereichs der antreibenden Einheit gezählt, dessen untere Grenze im Falle einer Brennkraftmaschine bei deren Leerlaufdrehzahl liegt.

Bei der Schaltungsanordnung zur Ermittlung des Schlupfes ist der Eingang eines Drehzahlmessers und ein Zähleingang eines ersten Zählers über einen Impulsformer an den Ausgang eines Impulsgebers mit drehzahlproportionaler Impulsrate der antreibenden Einheit, beispielsweise eines Totpunktsensors einer Brennkraftmaschine, angeschlossen. Dabei verbindet eine in einem vorgegebenen Drehzahlbereich signalführende Leitung den Ausgang des Drehzahlmessers mit einem Steuereingang des ersten Zählers. Während des Auflaufens einer vorgegebenen Zahl in den ersten Zähler gibt dieser ein Signal ab, das einen Start/Stopp-Eingang eines zweiten Zählers beaufschlagt, dessen Zähleingang über einen zweiten Impulsformer mit einem Impulsgeber mit drehzahlproportionaler Impulsrate an der angetriebenen Einheit, beispielsweise der sogenannten W-Klemme eines elektrischen Generators, verbunden ist. Die Bitausgänge des zweiten Zählers sind an eine Recheneinheit angeschlossen, die aus der gemessenen Zahl und einer Sollzahl den Schlupf errechnet.

An einer Zeichnung, die eine Schaltungsanordnung zur Ausübung des Verfahrens als Blockschaltbild darstellt, wird die Erfindung erläutert.

Eine Keilriemenscheibe 1 ist mit der Kurbelwelle einer nicht dargestellten Brennkraftmaschine verbunden. Das Drehmoment der Keilriemenscheibe 1 wird über einen Keilriemen 2 an eine Keilriemenscheibe 3 übertragen, die am Wellenende eines ebenfalls nicht dargestellten elektrischen Generators befestigt ist. Die Keilriemenscheibe 1 bzw. die sie antreibende Kurbelwelle trägt eine beispielsweise den oberen Totpunkt kennzeichnende Marke, die beim Umlaufen von einem Totpunktsensor 4 detektiert wird. An den Totpunktsensor sind über einen Impulsformer 5 der Eingang eines Drehzahlmessers 6 und der Zähleingang eines ersten Zählers 7 angeschlossen. Über ein vom Ausgang des Drehzahlmessers 6 in einem festzulegenden Drehzahlbereich abhängiges Signal wird der Zähleingang des Zählers 7 gesteuert. Der Zähler 7 zählt also nur während eines bestimmten Drehzahlbereiches die vom Totpunktsensor 4 ausgehenden Impulse. Der Zähleingang eines zweiten Zählers 8 ist über einen zweiten Impulsformer 9 an die sogenannte W-Klemme 10 des Generators angeschlossen, der von der Keilriemenscheibe 3 angetrieben wird. An der W-Klemme können Impulse abgenommen werden, deren Rate proportional der Drehzahl des Generators und der Polpaarzahl seines Läufers ist. Ein Start/Stopp-Eingang des zweiten Zählers 8 ist mit einem Ausgang des Zählers 7 verbunden und empfängt ein Signal, während im Zähler 7 eine vorgegebene Anzahl von Impulsen des Totpunktsensors 4 einläuft. Der zweite Zähler 8 zählt von der W-Klemme ausgehende Impulse, während im Zähler 7 eine bestimmte Anzahl von Impulsen des Totpunktsensors 4 einläuft. Eine Recheneinheit 11 verarbeitet die im Zähler 8 erhaltene Zahl zum gesuchten Schlupf zwischen Brennkraftmaschine und Generator nach dem Ausdruck

Schlupf: $s = \frac{n_{FKL} - n_{FKL\,ist}}{n_{FKL}} \cdot 100\,\%$

wobei $n_{FKL}$ die Anzahl der Lichtmaschinenimpulse auf eine vorgegebene Anzahl von Totpunktimpulsen bei angenommener fester Kopplung zwischen Brennkraftmaschine und Generator bedeutet.

Die Abhängigkeit der Zählung der Totpunktimpulse im Zähler 7 von einem bestimmten Drehzahlbereich kann auch durch eine entsprechende Software festgelegt sein.

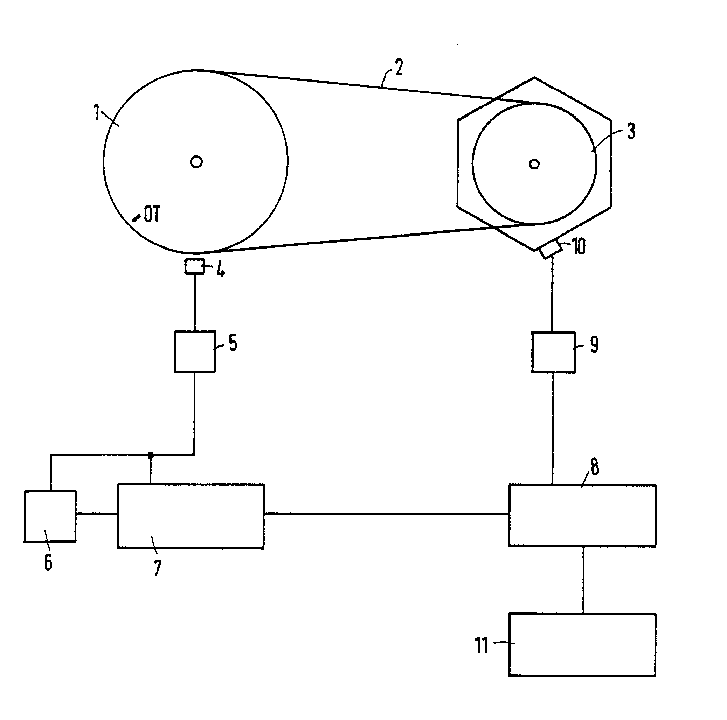

**Patentansprüche**

1. Schaltungsanordnung zur Bestimmung der Spannung eines Keilriemens zwischen zwei mit Wellen einer antreibenden bzw. einer angetriebenen Einheit verbundenen Keilriemenscheiben (1, 3) mit drehzahlproportionalen Impulsgebern an der antreibenden und der angetriebenen Einheit, deren Ausgangsimpulse über Impulsformer (5, 9) und mindestens einen Zähler (7, 8) zur Ermittlung des Schlupfes ausgewertet werden,
dadurch gekennzeichnet, daß
- die Eingänge eines Drehzahlmessers (6) und eines ersten Zählers (7) über einen ersten Impulsformer (5) an den Ausgang eines ersten Impulsgebers (4) mit drehzahlproportionaler Impulsrate der antreibenden Einheit angeschlossen sind,
- daß der Ausgang des Drehzahlmessers (6) mit einem Steuereingang des ersten Zählers (7) verbunden ist und den ersten Zähler (7) derart steuert, daß dieser nur in einem bestimmten Drehzahlbereich die vom ersten Impulsgeber (4) ausgehenden Impulse zählt,
- daß ein Zähleingang eines zweiten Zählers (8) über einen zweiten Impulsformer (9) mit einem zweiten Impulsgeber (10) mit drehzahlproportionaler Impulsrate der angetriebenen Einheit verbunden ist, wobei während des Auflaufens einer vorgegebenen Anzahl von Impulsen in den ersten Zähler (7) dieser einen Start/Stopp-Eingang des zweiten Zählers (8) mit einem Signal zur Zählung der Impulse beaufschlagt,
- und daß Bitausgänge des zweiten Zählers (8) mit einer Recheneinheit (11) in Verbindung stehen, die aus der gemessenen Zahl und einer Sollzahl den Schlupf errechnet.

2. Schaltungsanordnung nach Anspruch 1, dadurch gekennzeichnet, daß der erste Impulsgeber (4) mit drehzahlproportionaler Impulsrate der antreibenden Einheit ein Totpunktsensor der Brennkraftmaschine und der zweite Impulsgeber (10) an der angetriebenen Einheit die W-Klemme des Generators ist.

**Claims**

1. A circuitry for determining the tension of a V-belt between two V-belt discs (1, 3) which are connected to shafts of a respective driving and a driven unit and comprises speed-proportional pulse generators on the driving and driven units whose output pulses are analysed by means of pulse formers (5, 9) and at least one counter (7, 8) in order to determine the slip, characterised in that

- the inputs of a tachometer (6) and of a first counter (7) are connected via a first pulse former (5) to the output of a first pulse generator (4) with a pulse rate which is proportional to the speed of the driving unit.

- that the output of the tachometer (6) is connected to the control input of the first counter (7) and controls the first counter (7) in such a manner that it only counts the pulses which emanate from the first pulse generator (4) in a specific speed range,

- that a counting input of a second counter (8) is connected to a second pulse generator (10) having a pulse rate proportional to the speed of the driven unit by means of a second pulse former (9), where during the accumulation of a predetermined number of pulses in the first counter (7) the latter feeds a signal for counting the pulse to a start/stop input of the second counter (8),

- and that bit outputs of the second counter (8) are connected to a computing unit (11) which calculates the slip from the measured figure and a theoretical figure.

2. A circuitry as claimed in claim 1, characterised in that the first pulse generator (4) having a pulse rate which is proportional to the speed of the driving unit is a dead centre sensor of the internal combustion engine and the second pulse generator (10) on the driven unit constitutes the W-clamp of the generator.

**Revendications**

1. Montage pour déterminer la tension d'une courroie trapézoïdale entre deux poulies à courroie trapézoïdale (1, 3) reliées à des arbres d'une unité motrice et d'une unité menée, et comportant des générateurs d'impulsions, dont le fonctionnement est proportionnel à la vitesse de rotation et qui sont situés dans l'unité motrice et dans l'unité menée et dont les impulsions de sortie sont évaluées par l'intermédiaire d'un dispositif (5, 9) de mise en forme d'impulsions et par au moins un compteur (7, 8) pour la détermination du glissement, caractérisé par le fait que

- les entrées d'un tachymètre (6) et d'un premier compteur (7) sont raccordées par l'intermédiaire d'un premier dispositif (5) de mise en forme d'impulsions à la sortie d'un premier générateur d'impulsions (4), dont la fréquence des impulsions est proportionnelle à la vitesse de rotation, de l'unité motrice,

- que le signal de sortie du tachymètre (6) est relie à l'entrée du commande du premier compteur (7) et commande le premier compteur (7) de telle sorte que ce dernier compte les impulsions délivrées par le premier générateur d'impulsions (4), uniquement pendant une plage déterminée de vitesses de rotation,

- qu'une entrée de comptage d'un second compteur (8) est reliée par l'intermédiaire d'un second dispositif (9) de mise en forme des impulsions, à un second générateur d'impulsions (10), dont la fréquence des impulsions est proportionnelle à la vitesse de rotation, de l'unité menée, auquel cas pendant l'apparition d'un nombre prédéterminé d'impulsions dans le premier compteur (7), ce dernier charge une entrée de démarrage/d'arrêt du second compteur (8) avec un signal pour compter des impulsions, et

- que les sorties de bits du second compteur (8) sont reliées à une unité de calcul (11), qui calcule le glissement à partir du nombre mesuré et d'un nombre de consigne.

2. Montage suivant la revendication 1, caractérisé par le fait que le premier générateur d'impulsions (4), dont la fréquence des impulsions est proportionnelle à la vitesse de rotation, de l'unité motrice est un capteur de point mort du moteur à combustion interne et que le second générateur d'impulsions (10) monté sur l'unité menée est la borne W de l'alternateur.